# EUROPEAN PATENT SPECIFICATION

(11) **EP 4 107 671 B1**
(45) Date of publication and mention of the grant of the patent: **25.11.2026**
(21) Application number: 21731120.8
(22) Date of filing: 04.06.2021
(51) Int. Cl.: G06N 3/084, G06N 3/082, G06N 3/044, G06N 3/045, G06N 3/0464, G06N 3/0495, G06N 3/09

(54) **SYSTEM AND METHOD FOR TRAINING A SPARSE NEURAL NETWORK WHILST MAINTAINING SPARSITY**
SYSTEM UND VERFAHREN ZUM TRAINIEREN EINES SPÄRLICHEN NEURONALEN NETZES UNTER AUFRECHTERHALTUNG VON SPARSITY
SYSTÈME ET PROCÉDÉ D'ENTRAÎNEMENT D'UN RÉSEAU NEURONAL CLAIRSEMÉ TOUT EN MAINTENANT L'ÉTAT CLAIRSEMÉ

(30) Priority: 05.06.2020 US 202063035526 P
(43) Date of publication of application: 28.12.2022
(73) Proprietor: GDM Holding LLC, Mountain View, CA 94043 (US)
(72) Inventor: JAYAKUMAR, Siddhant Madhu, London N1C 4AG (GB); PASCANU, Razvan, London N1C 4AG (GB); RAE, Jack William, London N1C 4AG (GB); OSINDERO, Simon, London N1C 4AG (GB); ELSEN, Erich Konrad, Mountain View, California 94043 (US)
(74) Representative: Marks & Clerk GST
(86) International application number: PCT/EP2021/065069
(87) International publication number: WO 2021/245275

(56) References cited:
- UTKU EVCI ET AL: "Rigging the Lottery: Making All Tickets Winners", ARXIV.ORG, CORNELL UNIVERSITY LIBRARY, 201 OLIN LIBRARY CORNELL UNIVERSITY ITHACA, NY 14853, 25 November 2019 (2019-11-25), XP081539256
- MD AAMIR RAIHAN ET AL: "Sparse Weight Activation Training", ARXIV.ORG, CORNELL UNIVERSITY LIBRARY, 201 OLIN LIBRARY CORNELL UNIVERSITY ITHACA, NY 14853, 7 January 2020 (2020-01-07), XP081573383
- BELLEC GUILLAUME ET AL: "Deep Rewiring: Training Very Sparse Deep Networks", 7 August 2018 (2018-08-07), pages 1 - 24, XP055832112, Retrieved from the Internet <URL:https://arxiv.org/pdf/1711.05136.pdf> [retrieved on 20210816]
- JAYAKUMAR SIDDHANT M ET AL: "Top-KAST: Top-K Always Sparse Training", 11 December 2020 (2020-12-11), pages 1 - 11, XP055832099, Retrieved from the Internet <URL:https://proceedings.neurips.cc/paper/2020/file/ee76626ee11ada502d5dbf1fb5aae4d2-Paper.pdf> [retrieved on 20210816]

## Description

### BACKGROUND

This specification relates to training sparse neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters. Evci et al. "Rigging the Lottery: Making All Tickets Winners", arXiv:1911.11134v1 describes a method of training sparse neural networks that infrequently uses instantaneous (dense) gradient information to inform a re-wiring of the network. As long as the full gradient information is used less than every 1/(1 *- sparsity)* iterations, then the overall work remains proportional to the model sparsity. Raihan et al. "Sparse Weight Activation Training", arXiv:2001.01969v1 describes a technique for training convolutional neural networks that transforms small magnitude components of vectors into zero values. Bellec at al. "Deep Rewiring: Training very sparse deep networks", arXiv:1711.05136v5 describes a technique in which each connection has a predefined sign, and when a weight changes sign the connection vanishes and a new connection is activated randomly.

### SUMMARY

This specification describes a system and method implemented as computer programs on one or more computers in one or more locations that trains a neural network whilst adhering to sparsity requirements throughout. In particular the neural network may be trained without using a fully dense set of parameters during a forward pass or during a backwards pass for updating network parameters. This allows the neural network to be trained more efficiently, with a lower computational burden and lower energy expenditure. This also allows the neural network to be trained on less computationally powerful devices or on devices with fewer energy resources. In addition, specific embodiments are described herein that adapt the present methodology to specific hardware configurations for optimized performance.

The invention is set out in independent claims 1 and 11-13. Preferred aspects of the invention are set out in the dependent claims.

Thus in one aspect a computer-implemented method of training a neural network having a plurality of network parameters and being configured to process an input data item to generate a neural network output, comprises, repeatedly determining a forward-pass set of network parameters by selecting a first sub-set of parameters from the plurality of network parameters and setting all other parameters of the forward-pass set of network parameters to zero, processing a training data item using the neural network in accordance with the forward-pass set of network parameters to generate the neural network output determining a value of an objective function from the neural network output and the training data item, selecting a second sub-set of parameters from the plurality of network parameters, determining a backward-pass set of network parameters comprising the first sub-set of parameters and the second sub-set of parameters and updating parameters of the plurality of network parameters corresponding to the backward-pass set of network parameters, using a gradient estimate determined from the value of the objective function.

In implementations the neural network is trained by choosing, as a parameter set for a training step, a sub-set of the available parameters. The parameters that have not been chosen are set to zero, thereby imposing a sparsity criterion on a forward training pass. A forward training pass performed on training data using this set of parameters yields a neural network output that can be used together with the training data to determine an objective function for use in calculating updates for the parameters of the network. If the set of parameters that is updated in this manner is limited to include fewer than all of the parameters of the network then a sparsity constraint is also imposed on the update step. The neural network output can be a feature representation of the training data e.g. an ordered collection of numeric values such as a vector, that represents the data as a point in a multi-dimensional feature space.

The parameters selected for inclusion in the forward pass, i.e. the first sub-set, can be a percentage (or a number) of the parameters with the largest magnitude, e.g. norm, for example a top percentage (e.g. 10%) of parameters with the largest norm. The parameters that are updated in a backwards pass e.g. by backpropagation of gradients of the objective function, that is the second sub-set, can include the parameters selected for use in the forward pass and additionally another percentage (or another number) of parameters with the next largest magnitude, e.g. norm. For example another, e.g. the next, percentage (e.g. 10%) of the parameters may be selected. In an example the additional parameters are exclusively parameters that had not been included in non-zero parameters used for the forward pass. To maintain the sparsity constraint imposed by the selection of parameters, parameters that have not been selected are not updated. The order of the steps selecting the subsets of parameters, and the order of the forward and backwards passes through the neural network may be varied (noting that the method repeats).

In an example implementation the neural network comprises a plurality of neural network layers. In the embodiment the method further comprises selecting one or both of the first sub-set of parameters and the second sub-set of parameters layer-by-layer of the neural network.

When updating the parameters selected for the forward pass may be penalized using a regularization function (loss). The further parameters selected for updating may also be penalized using a regularization function (loss). The two regularization functions can be different functions. Parameters not selected for updating are not affected by these regularization functions. In one example the parameters selected for the forward pass are penalized less than the additional parameters selected for updating. This helps to mitigate a situation in which a parameter selected for updating that has not been selected to be non-zero in the forward pass evolves in a way that causes it to be selected to be non-zero in the next forward training pass, only to lose importance when next being updated and be excluded from the non-zero parameters in a subsequent forward pass.

In example implementation alternatively or additionally a regularisation term that penalizes parameters of the second sub-set more than parameters of the plurality of network parameters that are not in the first sub-set or in the second sub-set may be applied.

In an example implementation alternatively or additionally a regularisation term that penalizes parameters of the first sub-set more than parameters of the plurality of network parameters that are not in the first sub-set or in the second sub-set may be applied.

In an example implementation the objective function includes a regularization term comprising a term or terms that penalize parameters of the first sub-set and the second sub-set more than parameters that are not in either of the first sub-set or the second sub-set.

In an example implementation there is no updating of all the plurality of network parameters using the gradient estimate.

In an example implementation at least one of the first sub-set and the second sub-set is selected to meet a predetermined sparsity criterion. Once a predetermined quality criterion has been fulfilled, the repeating may be stopped and, thereafter, the neural network may be trained using as only non-zero parameters of the plurality of parameters a last selected first sub-set of parameters of the plurality of network parameters.

The training is performed using dedicated training hardware. Such hardware may include e.g. an interface for receiving training data, training parameters or indices thereof and for communicating any result of the training to a communicatively connected processor at high communication speeds, and may also include matrix-multiply hardware and/or local memory. The dedicated hardware of one example includes arrangements configured for efficient matrix multiplication operations and/or multiply and accumulation operations.

Tasks not using the particular architecture of the dedicated training hardware are performed on a general purpose processor that forms part of a training system alongside the dedicated training hardware but that is separate from the training hardware. The selection of parameters that are to remain non-zero during the forward pass or that are to be included in the parameter updates can require the entire parameter set, or at least the full parameter set of a layer, to be held in memory. This may compromise training speed and reduce a benefit of the sparse training if performed in the dedicated training hardware e.g. if local memory of the training hardware is insufficient to store the full set of parameters for the neural network. By identifying the parameters to be retained as non-zero parameters or to be used in parameter updates in a processor outside of the dedicated training hardware the dedicated training hardware can be used for the training steps. Thus a complete set of the plurality of network parameters need not be loaded into the neural network training hardware at any one time. The method is split so that the memory-intensive operations of determining the parameter subsets are performed by the general purpose processor, either for the compete neural network or layer-by-layer, whilst the reduced-memory sparse forward and/or backward computational passes are implemented by the training hardware which is dedicated to this task.

In an example implementation the plurality of network parameters is never loaded into the neural network training hardware at the same time, i.e. the neural network training hardware is never required to load all of the plurality of network parameters at any given point in time.

In an example implementation the neural network comprises a plurality of neural network layers. The method may then comprise performing the repeated steps on the general purpose processor one neural network layer at a time.

In one example the first and second sub-set are determined anew after every training pass. In other examples multiple training passes may be performed using the same parameters in the respective first and second sub-group before the composition of the sub-groups is reconsidered and updated, if required.

In an example the repeated steps are performed on the neural network training hardware multiple times before performing the repeated steps on the general purpose processor.

In an example, whilst repeating the method, the repeated steps are performed on the general purpose processor, and on the neural network training hardware, in parallel.

The neural network can be configured to receive any kind of digital data input and to generate any kind of score, classification, or regression output based on the input.

A training method and system as described herein may be used to train a neural network comprising one or more feedforward, recurrent, autoregressive, and/or convolutional layers.

The input data item may comprise image data (which here includes video data) e.g. in the form of image pixels, audio data e.g. in the form of digital data characterizing a waveform of the audio, or text data e.g. words or word pieces (or representations thereof e.g. embeddings) in a natural language. The input data item may comprise sequential data e.g. a sequence of data samples representing digitised audio or an image represented as a sequence of pixels, or a video represented by a sequence of images, or a sequence representing a sequence of words in a natural language. Here "image" includes e.g. a radar or LIDAR image. (Throughout this specification, processing an image using a neural network refers to processing intensity values associated with the pixels of the image using the neural network).

In some implementations the neural network output may comprise a feature representation, which may then be further processed to generate a system output. For example the system output may comprise a classification output for classifying the input data item into one of a plurality of categories e.g. image, video or audio categories, e.g. data representing an estimated likelihood that the input data item or an object/element of the input data item belongs to a category (of a plurality of data item categories). Or the system output may be a segmentation output for segmenting regions of the input data item e.g. into objects or actions represented in an image or video, e.g. the output may comprise, for each pixel, an assigned segmentation category or a probability that the pixel belongs to a segmentation category such as an object or action represented in the image or video. Or the system output may be an action selection output in a reinforcement learning system e.g. for controlling a mechanical agent, operating in a real-world environment, to perform a task.

In some other implementations the network output may comprise another data item of the same or a different type. For example the input data item may be an image e.g. image pixels, audio e.g. a digitized waveform, or text; and the output data item may be a modified version of the image, audio or text, e.g. changing a style, content, property, pose and so forth of the input data item or of one or more objects or elements within the input data item; or filling in a (missing) portion of the input data item; or predicting another version of the data item or an extension of a video or audio data item; or providing an up-sampled (or down-sampled) version of the input data item. For example the input data item may be a representation of text in a first language and the output data item may be a translation of the text into another language, or a score for a translation of the text into another language. In another example an input image may be converted to a video, or a wire frame model, or CAD model (i.e. to an output data item representing these); or an input image in 2D may be converted into 3D; or vice-versa. Or the input data item may comprise features derived from spoken utterances or sequences of spoken utterances or features derived therefrom and the network system output may comprise a score for each of a set of pieces of text, each score representing an estimated likelihood that the piece of text is the correct transcript based on the features. In another example the input data item may be an image e.g. image pixels, audio e.g. a digitized waveform, or text; and the output data item may be a representation of the input data item in a different format, i.e. the input may be one of an image e.g. image pixels, audio e.g. a digitized waveform, or text; and the output another of these. For example the neural network may convert text to speech, or vice-versa for speech recognition, or an image (or video) to text (e.g. for captioning). When generating an output comprising sequential data the neural network may include one or more convolutional e.g. dilated convolutional layers.

In some other implementations the network output may comprise an output for selecting an action to be performed by an agent, such as a robot or other mechanical agent in an environment e.g. a real world environment or a simulation of a real world environment. The input data item may be an observation of the environment, e.g. comprising an image (or video) observation of the environment.

In some implementations the neural network is configured to receive an input data item and to process the input data item to generate a feature representation of the input data item in accordance with the network parameters. Generally, a feature representation of a data item is an ordered collection of numeric values, e.g., a vector, that represents the data item as a point in a multi-dimensional feature space. In other words, each feature representation may include numeric values for each of a plurality of features of the input data item. As previously described the neural network can be configured to receive as input any kind of digital data input and to generate a feature representation from the input. For example, the input data items, which may also be also referred to as network inputs, can be images, portions of documents, text sequences, audio data, medical data, and so forth.

The neural network can have any architecture that is appropriate for the type of network inputs processed by the neural network. For example, when the network inputs are images, the neural network can be a convolutional neural network or a vision transformer neural network (arXiv: 2010.11929). For example, the feature representations can be the outputs of a final convolutional layer of the neural network. Alternatively the input data item may comprise time series data e.g. video image frames, environment observations captured by one or more sensors a mechanical agent.

Once trained, the feature representations may be used (directly) for a task or can provide an input to another system e.g., for use in performing a machine learning task on the network inputs. Example tasks may include feature based retrieval, clustering, near duplicate detection, verification, feature matching, domain adaptation, video based weakly supervised learning; and for video e.g. object tracking across video frames, gesture recognition of gestures that are performed by entities depicted in the video. For example feature based retrieval, clustering, and near duplicate detection may involve comparing the feature representations from different input data items; the input data items may, as previously, comprise for example an image e.g. image pixels, audio e.g. a digitized waveform, or text.

If the inputs to the neural network are images or features that have been extracted from images, the output generated by the neural network for a given image may be scores for each of a set of object categories, with each score representing an estimated likelihood that the image contains an image of an object belonging to the category.

As another example, if the inputs to the neural network are Internet resources (e.g., web pages), documents, or portions of documents or features extracted from Internet resources, documents, or portions of documents, the output generated by the neural network for a given Internet resource, document, or portion of a document may be a score for each of a set of topics, with each score representing an estimated likelihood that the Internet resource, document, or document portion is about the topic.

As another example, if the inputs to the neural network are features of an impression context for a particular advertisement, the output generated by the neural network may be a score that represents an estimated likelihood that the particular advertisement will be clicked on.

As another example, if the inputs to the neural network are features of a personalized recommendation for a user, e.g., features characterizing the context for the recommendation, e.g., features characterizing previous actions taken by the user, the output generated by the neural network may be a score for each of a set of content items, with each score representing an estimated likelihood that the user will respond favorably to being recommended the content item.

As another example, if the input to the neural network is a sequence of text in one language, the output generated by the neural network may be a score for each of a set of pieces of text in another language, with each score representing an estimated likelihood that the piece of text in the other language is a proper translation of the input text into the other language. As another example, if the input to the neural network is a sequence representing a spoken utterance, the output generated by the neural network may be a score for each of a set of pieces of text, each score representing an estimated likelihood that the piece of text is the correct transcript for the utterance.

A corresponding system is also described.

There are also described computer-readable instructions, and one or more computer storage media storing computer-readable instructions, that when executed implement a method as described above on a system as described herein.

The subject matter described in this specification can be implemented in particular embodiments so as to realize one or more of the following advantages.

Neural networks of increasing size can increase the computational burden involved in their training dramatically, irrespective of the density of the neural network once trained. In particular if training involves the handling of fully dense matrices, the computational burden involved in training can become overwhelming and may limit the size of the neural network that can be trained on a given piece of computing equipment. The energy consumption of a device used in training neural networks also increases with increasing network size. By maintaining sparsity throughout training the energy consumption associated with the training exercise is limited, making training in devices with a limited energy budget more feasible.

The method described herein allows the training and running of neural network of a size that is beyond the current computational limits of some devices. By maintaining sparsity throughout training the size of the matrices that need to be maintained in memory is limited, providing for a more efficient use of memory space. By allowing training to take place on less computationally powerful devices or on devices with a smaller energy resources, training can, for example, take place on computing devices owned by particular users on less powerful processing hardware, e.g., consumer hardware such mobile phones and tablet computers, having only CPUs. In this way training can be personalized to the user. In these computing environments, the neural network can be implemented locally on the hardware, which means that the network can execute without a network connection to a data center, without the use of dedicated parallel processing hardware like GPUs, and without requiring special-purpose hardware. This, for example, could allow even real-time audio waveform generation to be performed on handheld mobile devices, e.g., for text-to-speech applications. It also allows for more sophisticated and more complex neural networks to be implemented in environments with significant latency requirements. For example by placing language recognition neural networks on a user device such neural networks can be trained to recognize the spoken language of the individual user. The use of large, sparse neural networks also allows increased predictive accuracy.

The approach described herein is, moreover, straightforward in terms of additional programming effort in implementing the training method and is compatible with deployment in some existing machine learning frameworks.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1A shows an example of a computer-implemented method of training a neural network.
Fig. 1B illustrates network parameters *A, B and C* used in the method of Fig. 1A.
Fig. 2 is a diagram of an example system for training a neural network.
Fig. 3 illustrates performance of the method used for sparse training on a vision task.
Fig. 4 illustrates performance of the method used for sparse training on a language task.

In the figures, similar components or features may have the same reference label.

### DETAILED DESCRIPTION

This specification describes a method that can be used for a training neural network whilst maintaining sparsity throughout, i.e. in both forward backward training passes through the network, from an input to an output of the neural network, and vice-versa to perform gradient descent training. The method is particularly suited to hardware implementation.

In an embodiment the neural network comprises a plurality of layers, some of which may be hidden layers. Each layer receives an input, e.g., an input vector. The values of the inputs may also be referred to as activation values. In the case that layer *L* is the first layer of the neural network, the activation values are the inputs to the neural network. The input vector may, in one example, be composed of elements have a pre-defined order (for example, they may be indicative of respective text characters in a passage of text; or data describing an environment at successive times). In the case that the layer *L* is a hidden layer of the neural network, the activation values are outputs from the preceding (i.e. *L* - 1) layer. A neural network system may comprise an activation engine for each of the layers of the neural network. The activation engine is configured to use the input received by layer and the parameter matrix for the layer *L* to generate multiple output values using an activation function. The multiple output values form the activation values of layer *L* + 1 or, if the neural network layer is the last layer of the neural network, form the output of the neural network system.

The computational footprint occupied by individual activation engines and the energy consumed in generating the output values depends on the complexity of the computation that needs to be performed. Computation complexity in turn is dependent on the number of parameters used in the layer in question. As the size of neural networks and neural network layers increases, the resulting computational footprint an associated power consumption increases.

In sparse neural networks large numbers of the parameters of the neural network (and consequently also of individual layers) are zero, limiting both the computational footprint as well as power requirement associated with generating the output values of the network/network layers. As neural networks increase in size, sparse neural networks are becoming increasingly important in helping to improve performance, by allowing scale up whilst avoiding or at least mitigating this increase in computational footprint and power consumption.

Even though a fully trained neural network may have a sparse parameter set, standard training of any such neural network uses denser or fully dense parameter sets. The computational footprint that can potentially limit the use of neural networks equally places a limitation on the size of the neural network that can be trained with a given set of computational resources. To avoid or at least alleviate these problems, it is desirable that the training of a neural network is able to:
1. Produce a network of desired weight sparsity *S_{final}* after training is finished.
2. Have minimal compute and memory overheads relative to training a fixed (i.e. static) topology sparse model.

A solution is described herein that satisfies both the first criterion and the second criterion, and achieves high accuracy for a given number of training floating point operations (FLOPs) while being easy to integrate into existing frameworks.

A generic neural network can be parameterised by function *f* with parameters *θ^{t}* at some training step *t* and input *x.* The output from the forward pass is y = *f*(*θ^{t}, x).* During learning the parameters are updated as *θ*^{*t*+1} *= θ^{t} - η*∇*_{θ^{t}}L*(*y, x),* where L is the loss function and *η* is a learning rate.

The aim is to maintain a network weight sparsity of *S* ∈ [0,1] throughout training, where *S* represents the proportion of weights that are zero (*D* = 1 - *S* is the corresponding proportion of the network with non-zero weights). To do so, at each point in time there is defined a parameterisation *α^{t},* i.e. a parameterisation that retains a subset of weights from ${θ}_{i}^{t}$ and replaces the rest with zeros. Thus in implementations: ${α}_{i}^{t} = \left\{\begin{matrix}{θ}_{i}^{t} & if i ∈ {A}^{t} \\ 0 & otherwise\end{matrix}\right.$ (1) where *A^{t}* defines a sparse subset of parameter indices that are considered to be "active", i.e. non-zero, at time *t.* Membership of *A^{t}* is restricted to the top D-proportion of weights (from *θ^{t}*) by magnitude, i.e. selected by a *TopK(D)* operation, that is: ${A}^{t} = \left\{i\left|{θ}_{i}^{t}∈TopK\left({θ}^{t}, D\right)\right.\right\}$ (2)

In one implementation, the TopK operation is performed per layer. In another implementation it is performed on the complete "flattened" set of parameters. A layer by layer pruning provides an advantage that it avoids setting the weight of an entire layer to zero.

Selecting weights according to their magnitude provides an effective but inexpensive estimate of which parameters contribute the most to defining the behaviour of the densely-parameterized function *f*(*θ, x*). Ideally *f*(*α, x*) should be the best approximation of *f*(*θ, x*) using *α* of fixed sparsity-proportion *S.* To obtain insight into the performance of the TopK approximation used in embodiments, the Taylor series expansion for *f*(*α, x*) around *θ*, where *G* is the gradient vector and *H* is the Hessian matrix, is considered: $f \left(α, x\right) \approx f \left(θ, x\right) + {G}^{T} \left(α-θ\right) + \frac{1}{2} {\left(α-θ\right)}^{T} H \left(α-θ\right) + ⋯$ (3)

While being able to calculate higher-order derivatives would provide more accurate sensitivity information, it is computationally intractable to do so for very large modern networks. However, as every term in the error scales with powers of (*α* - *θ*), without any information about the higher order derivatives it can be appropriate to minimize the norm of (*α* - *θ*). This corresponds to the selection process discussed above.

As during learning *α^{t}* is used in both for the forward-pass and in the backward-pass only the inference and back-propagation compute costs of a sparse model are incurred. However, *α^{t}* is best thought of as a "temporary view" of the dense parameterisation, *θ^{t}*. That is, the updates are applied to *θ* rather than *α,* and *α^{t}* is reconstructed periodically from *θ* by the same deterministic procedure of picking a largest (by magnitude) *D*-proportion of weights.

The gradient of the loss with respect to a sparse *α^{t}* parameterisation need not result in a sparse gradient vector; the gradient would typically be expected to be fully dense. This is because the gradients with respect to the 0 entries of *α^{t}* need not themselves be zero. This would thus not achieve the desired property that the training method has minimal compute and memory overheads relative to training a fixed (i.e. static) topology sparse model.

To avoid evaluating dense gradients in implementations the gradient is only calculated for a coordinate block composed of parameters with indices from the set *B^{t},* where: ${B}^{t} = \left\{i\left|{θ}_{i}^{t}∈TopK\left({θ}^{t},D+M\right)\right.\right\}$ (4)

Here, by definition, *B* is a superset of *A* and contains the indices corresponding to the non-zero entries of *α* as well as an additional set of indices corresponding to the next largest *M-*proportion of entries (by magnitude) of the dense parameterisation, *θ*. Updating the largest (*D* + *M*)-proportion of weights makes it more likely that this will lead to permutations in the top *D*-proportion weights that are active, and hence allows the learning process to more effectively explore different masks. This effective sparsity of (1 *- D - M*) units is referred to in this specification as backward sparsity.

Computing the gradient with respect to a subset of coordinates of *θ* implies that the gradient that is being computed is sparse. Consequently, there is no need to instantiate a dense vector of the size of *θ*. In an implementation an update for the parameters, ${Δ}_{{θ}_{i}^{t}}$, has the form: ${Δ}_{{θ}_{i}^{t}} = \left\{\begin{matrix}- η {∇}_{{α}^{t}} L {\left(y, x, {α}^{t}\right)}_{i} & if i ∈ {B}^{t} \\ 0 & otherwise\end{matrix}\right.$ (5)

In implementations at initialisation, *A* consists of a random subset of weight-indices from the freshly initialised *θ*⁰. As learning progresses, due to the updates on *B* coming both from the primary loss and the auxiliary regularisation term (described later) this set will change and evolve the weights and topology most useful for the desired function approximation.

The method of learning has two stages. In a first, exploratory stage, at each iteration, a different active set *A,* and its corresponding *α,* is selected, and one update step on *θ* is performed using gradients obtained from the loss on *f*(*α, x*) and, in implementations, the regularisation term. In a second, refinement stage, the active set A effectively becomes fixed, as a stable pattern of non-zero weights which then undergo fine-tuning to their optimal values has established itself.

In the first stage, the updates on the "additional" coordinates in the *set B \ A* (the relative complement of *A* in *B* i.e. *B - A*) allows exploration by changing the set of weights that will end up in the active set *A* (and thus used in *α*) on the next iteration. In the second stage, these "additional" updates become increasingly less impactful and eventually will be effectively ignored, as they will not alter *A* and hence will not be reflected in α for either the forward or backward passes. The exploratory stage of picking different subsets of parameters from *θ* sets makes this approach very different from simply having a fixed random sparsity pattern imposed on the network.

The method described above can lead to a rich-get-richer phenomenon, with only the randomly selected weights at initialization being used if others receive insufficient weight updates for their norm to exceed the critical threshold. This can be a particular risk at high levels of sparsity. To combat this the magnitude of the weights in set *B* may be penalised, while those weights that are neither used nor currently being updated (set *C*) are not penalized. The net effect of this is to reduce the magnitude of the active weights, making it more likely that on the next iteration the algorithm considers new items for the membership of both set *A and B.*

For high sparsity settings a teetering effect between weights in *B \ A* and *A* that are very close in magnitude may occur, leading to a slow down in learning. In one embodiment therefore *B \ A* is penalized more than A to increase the critical strength of updates needed for units from *B \ A* to move to *A.* The scale of this penalty is heuristically chosen to be inversely proportional to *D,* as this effect is more important for *D* « 1.

In one implementation this penalty is expressed as an *L*2 regularisation, with a similar split of units to that above. Specifically: ${Loss}_{R} \left({α}_{i}^{t}\right) = \left\{\begin{matrix}\left|{θ}_{i}^{t}\right| & if i ∈ {A}^{t} \\ \frac{\left|{θ}_{i}^{t}\right|}{D} & if i ∈ {B}^{t} \ {A}^{t} \\ 0 & else\end{matrix}\right.$ (6)

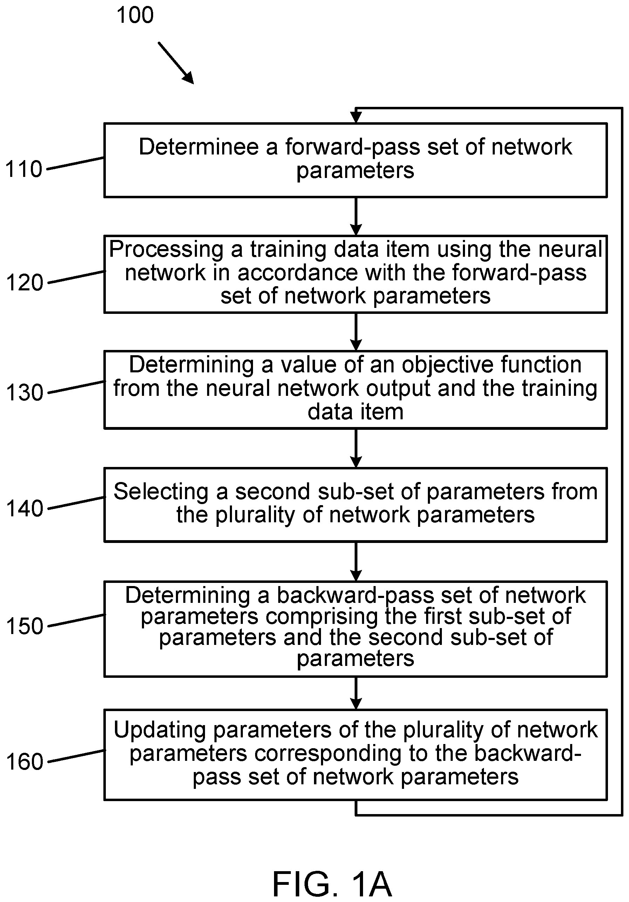

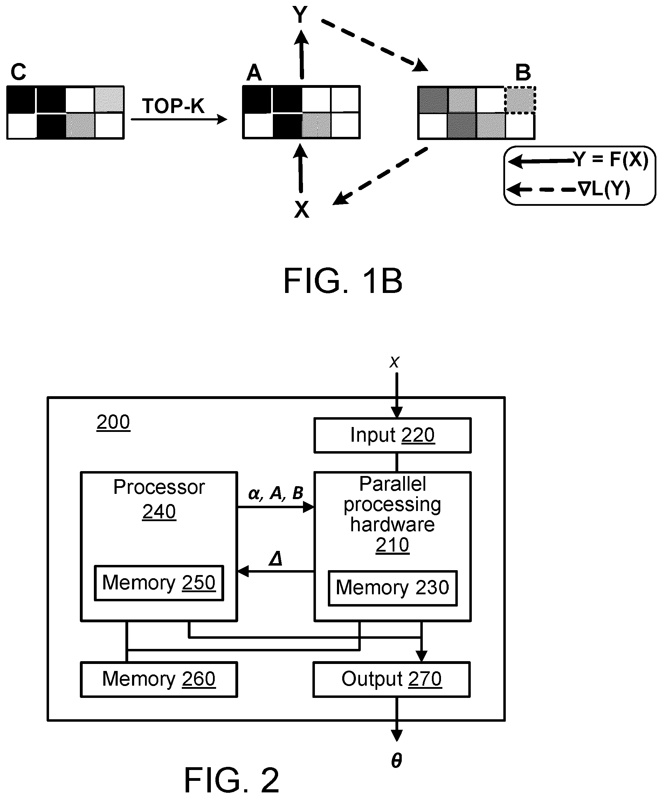

Fig. 1A illustrates an example of a computer-implemented method 100 of training a neural network that has a plurality of network parameters and that is configured to process an input data item *x* to generate a neural network output *y*. Fig. 1B illustrates network parameters *A, B* and *C* as used in the method 100. These parameters are shown for illustrative purposes only and an operational neural network will generally have a very large number of parameters, such as thousands, millions, or even billions of parameters.

In a first step 110 a forward-pass set of network parameters *A* is determined by selecting a first sub-set of parameters from the plurality of network parameters *C* and setting all other parameters of the forward-pass set of network parameters *A* to zero. In an embodiment this selection is performed by selecting a predetermined percentage of the plurality of network parameters *C,* so that a predetermined sparsity criterion *S* is fulfilled by the set of network parameters *A.* In an embodiment this selection includes selecting the network parameters with the highest magnitude. In Fig. 1B these are the left-most two parameters in the top row and the second and third parameters in the lower row. The rightmost parameter in the top row is the parameter with the next highest magnitude but this parameter is set to zero to meet the sparsity criterion *S.*

In a second step 120, a training data item x is processed using the neural network in accordance with the forward-pass set *A* of network parameters to generate a neural network output *y*.

In a third step 130, a value of an objective function is determined from the neural network output *y* and the training data item *x.* In an embodiment this may comprise determining a loss function in a known manner.

In step 140, a second sub-set of parameters *B* is selected from the plurality of network parameters *C.* As discussed above, in an embodiment the selection of the second sub-set of parameters *B* includes selecting a number of parameters out of *C \ B* (the relative complement of *B* with respect to *C*) that have the largest magnitude of the remaining parameters, This selection is made so that the parameters of the second sub-set together with the parameters of the forward pass sub-set fulfil a second sparsity requirement if all other parameters are set to zero. In the example shown in Fig. 1B the rightmost parameter in the top row is selected as the second sub-set in this manner.

In step 150 a backward-pass set of network parameters that comprises the first sub-set of parameters and the second sub-set of parameters is determined. This backward-pass set is used in step 160 in updating those parameters of the plurality of network parameters that correspond to the backward-pass set of network parameters. The update uses a gradient estimate determined from the value of the objective function i.e. the update comprises an estimated gradient of the objective function. This may be done in accordance with equation (5) above.

The steps of the method 100 are repeated until an interrupt criterion (or end criterion) is met. Such criteria may include at least a predetermined number of training steps or a determination that training is completed (e.g. a determination that the neural network performs at least according to a minimum required performance criterion).

Fig. 2 is a diagram of an example system 200 for training a neural network in accordance with the techniques described herein. The system 200, in one application, implements a neural network training function on parallel processing hardware 210. The training may be based on training data items x. These may be provided to an input 220 of the system 200 from a training data source that is located outside of the system 200. The input 220 in turn may, if needed, buffer the training data items x and supply them to the parallel processing hardware 210. Alternatively, training data may be stored on and provided to the parallel processing hardware 210 e.g. from a database that forms part of the system 200.

The use of parallel processing hardware allows for some matrix operations of the forward and backward-pass operations to be performed in parallel by all available processing units, and other matrix operations can be performed in parallel by subsets of available processing units. In one embodiment the parallel processing hardware 210 comprises a memory 230 for storing the most up-to-date set of network parameters C. In this embodiment the parallel processing hardware 210 performs the one or both of the two selection steps 110 or 140 and uses the selected parameters sets in the above described manner.

The system 200 comprises a further processor 240. This processor is a general purpose processor/CPU. The processor 240 is configured to perform the selection 110 and 140, for example in parallel with a training step performed by the parallel processing hardware 210, and respectively pass at least one of the set of forward-pass parameters *A* or the set of backward-pass parameters *B* to the parallel processing hardware 210. In this manner the parallel processing hardware 220 does not need to perform one or both of these selection steps. Consequently, this embodiment prevents the need for the parallel processing hardware 210 to store the dense parameter set C in memory. The processor 240 may comprise its own memory 250, for example the processor's heap, to store the current "dense" set of parameters C.

The parallel processing hardware 210 is further configured to, once it has determined the relevant parameter updates Δ, report the parameter updates Δ to the processor 240. The processor 240 in turn updates the parameters *C* using Δ and updates *A* and *B.*

The system 200 further comprises one or more memories 260 in which executable instructions for either or both of the parallel processing hardware 210 and the processor 240 are stored. The one or more memories 260 may be one or more non-volatile memories. The parallel processing hardware 210 and the processor 240, are configured to implement the methods described herein through execution of the executable instructions. The system may also comprise an output 270 through which the trained weights *θ* are output once training is completed. That is, once the training has been completed, the trained sparse neural network may be output, e.g. for implementation on an external device. Alternatively, once the sparse neural network has been trained, it may be implemented by the system 200, to generate an inference and output the inference (e.g. through the output 270).

In some implementations the cost of performing a Top-K operation in the forward pass every iteration may be mitigated. This operation does not need to be performed every iteration and may be performed every *N* training steps, where *N*>1, *N*>10, or *N>50,* whilst providing comparable results. Such an implementation may only employ occasional communication of the indices and weights and the Top-K operation may be calculated in parallel on CPU as it does not require any data or forward passes. An accelerator, e.g. parallel processing hardware 210, may only know the actual sparse weights and may be implemented entirely sparsely.

Table 1 below shows the results of neural network training according to a method performed with an update as described above with reference to Fig. 1A performed for every training step (N=1), and only for every 100 training steps, at various forward-pass and backward-pass sparsities:

**Table 1**

| **Fwd** | **Bwd** | ***N=**1* | *N = 100* |
|---|---|---|---|
| 80% | 50% | 75.03 | 75.14 |
| 90% | 80% | 73.03 | 73.18 |
| 95% | 90% | 70.42 | 70.38 |

As can be seen, comparable performance is achieved for N=1 and N=100. By choosing N>1 overheads in updating the forward-pass and backward-pass parameters sets can be mitigated. Also, in embodiments where the parameters sets are determined by a general purpose processor 220 as discussed above, whilst the parallel processing hardware 210 performs training steps, using N>1 mitigates delays associated with the updating of these sets.

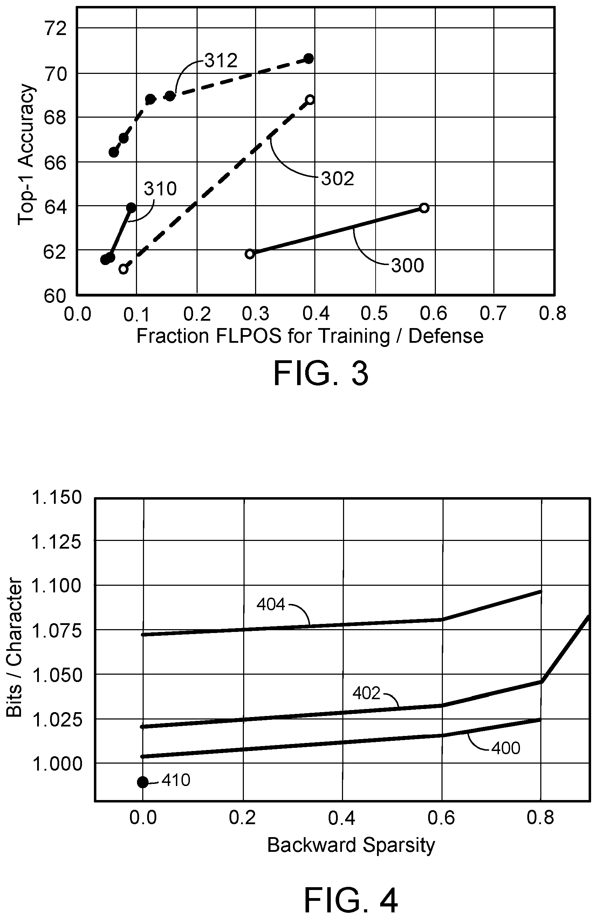

A method of training a sparse neural network as described herein can provide a comparable performance on e.g. an image classification task, to a method which instantiates dense parameters and then prunes, but with an advantage that the neural network remains sparse throughout the training, thus facilitating training a larger model on given hardware. Further, at high levels of sparsity the described method can perform better than a state of the art sparse method, Evci et al. "Rigging the lottery: Making All Tickets Winners", arXiv:1911.11134, "RigL", as illustrated in Fig. 3.

Fig. 3 relates to training a ResNet-50, He et al., arxiv: 1512.03385, to perform image classification using images from the ImageNet database, Russakovsky et al., arxiv:1409.0575. In Fig. 3 the y-axis shows percentage top-1 accuracy, i.e. the accuracy of the prediction with the highest probability, and the x-axis shows the FLOPS needed for training as a fraction of those needed for a dense model. Curves 300 and 302 show the performance of RigL; curves 310 and 312 show the performance of the method described herein. Curves 302 and 312 are for 98% (forward) sparsity and curves 300 and 310 are for 99% (forward) sparsity. The described method performs better at the cost of a little additional compute, the cost of performing a Top-K operation in the forward pass every iteration (which can be mitigated as previously described). Also the described method is compatible with existing gradient calculations.

Fig. 4 relates to training an Transformer-XL-based language model (Dai et al., arxiv: 1901.02860) to perform a data compression task using the enwik8 data set (Mahoney, "Large text compression benchmark" 2011). In Fig. 4 the y-axis shows bits per character (BPC) used to represent the data, and the x-axis shows backward sparsity up to 80% (0.8). Curves 400, 402, 404 show, respectively, forward sparsity of 0.8, 0.9 and 0.95 and point 410 shows a dense model. Results comparable to the dense model are obtained up to around 80% sparsity.

It is hypothesised that the learning dynamics divides learning into an exploration phase in which an optimal mask is discovered and a refinement phase in which the parameters of the mask are refined. Removing all exploration units (B \ A) is very harmful for performance, but in one trial training for just 5000 steps with these units considerably boosted performance and at 16000 training steps most of the benefits of the described method were obtained. Thus it appears that for the latter half of training the gradients fine-tune performance on the learnt mask, which stays more or less constant. Set C units are reservoir units, used in neither the forward nor backward passes at initialisation. From testing it also appears that only about 5% of these units are ever used, and most of the change in these occurs at the start of training.

Set *B* is defined as those units used in the forward-pass set *A* plus the next-highest set of units by magnitude. In theory these extra units could be randomly sampled, to explore more of the space. However whilst such random exploration can be beneficial for a forward sparsity of less than 90% it is deleterious for higher levels of sparsity.

Merely as an example, the algorithm below shows an implementation of the method which is compatible with a machine learning optimizer using dense kernels, although in other implementations sparse kernels may be used:

```
 // First perform a Top-K
 dense_params = initialise()
 fwd_params = TopK(dense_params, X%)
 bwd_params = TopK(dense_params, Y%)
 just_bwd_set = set(bwd_params) - set(fwd_params)
 // Output with just the TopK params
 output = model(fwd_params, input)
 loss = loss)fn(output)
 // Exploration L2 Loss
 loss += l2(fwd_params) + l2(just_bwd_set) / (X/100)
 // Update only the bwd params
 bwd_params = bwd_params - grad(loss, bwd_params)
```

In situations in which the systems discussed here make use of data potentially including personal information, that data may be treated in one or more ways, such as aggregation and anonymization, before it is stored or used so that such personal information cannot be determined from the data that is stored or used. Furthermore, the use of such information may be such that no personally identifiable information may be determined from the output of the systems that use such information.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser. Also, a computer can interact with a user by sending text messages or other forms of message to a personal device, e.g., a smartphone that is running a messaging application, and receiving responsive messages from the user in return

Data processing apparatus for implementing machine learning models can also include, for example, special-purpose hardware accelerator units for processing common and compute-intensive parts of machine learning training or production, i.e., inference, workloads. Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described.

## Claims

1. A computer-implemented method of training a neural network having a plurality of network parameters (*θ*) and being configured to process an input data item to generate a neural network output, the method comprising, repeatedly:
determining (110) a forward-pass set of network parameters (*A*) by selecting a first sub-set of parameters (D) from the plurality of network parameters and setting all other parameters of the forward-pass set of network parameters to zero, wherein the first sub-set of parameters consists of a subset of the largest of the plurality of network parameters;
processing (120) a training data item using the neural network in accordance with the forward-pass set of network parameters to generate the neural network output;
determining (130) a value of an objective function from the neural network output and the training data item;
selecting (140) a second sub-set of parameters (M) from the plurality of network parameters, wherein the second sub-set of parameters consists of a subset of the next largest of the plurality of network parameters;
determining (150) a backward-pass set of network parameters (B) consisting of the first sub-set of parameters and the second sub-set of parameters; and
updating (160) parameters of the plurality of network parameters corresponding to the backward-pass set of network parameters, using a gradient estimate determined from the value of the objective function; the method further comprising:
apportioning the method between a general purpose processor (240) and neural network training hardware (210), and
performing, on the general purpose processor, the repeated steps of: selecting the first sub-set of parameters and selecting the second sub-set of parameters; and
performing, on the neural network training hardware, the repeated steps of: processing a training data item using the neural network in accordance with the forward-pass set of network parameters, and updating parameters of the plurality of network parameters corresponding to the backward-pass set of network parameters.

2. The method of claim 1, wherein the plurality of network parameters is never loaded into the neural network training hardware at the same time.

3. The method of any of claims 1-2, wherein the neural network comprises a plurality of neural network layers, the method comprising: performing those repeated steps that are performed on the general purpose processor, one neural network layer at a time.

4. The method of any of claims 1-3 comprising performing the repeated steps on the neural network training hardware multiple times before performing the repeated steps on the general purpose processor.

5. The method of any of claims 1-4, comprising, whilst repeating the method, performing the repeated steps on the general purpose processor, and on the neural network training hardware, in parallel.

6. The method of any of claims 1-5, wherein the neural network comprises a plurality of neural network layers, the method further comprising selecting one or both of the first sub-set of parameters and the second sub-set of parameters layer-by-layer of the neural network.

7. The method of any of claims 1-6, wherein the objective function includes a regularization term ( ${Loss}_{R} \left({α}_{i}^{t}\right)$) comprising one or more of:
a term that penalizes parameters of the second sub-set more than parameters of the first sub-set;
a term that penalizes parameters of the second sub-set more than parameters of the plurality of network parameters that are not in the first sub-set or in the second sub-set; and
a term that penalizes parameters of the first sub-set more than parameters of the plurality of network parameters that are not in the first sub-set or in the second sub-set.

8. The method of any one of claims 1 to 7, wherein the objective function includes a regularization term ( ${Loss}_{R} \left({α}_{i}^{t}\right)$) comprising a term or terms that penalize parameters of the first sub-set and the second sub-set more than parameters that are not in either of the first sub-set or the second sub-set.

9. The method of any of claims 1 to 8, wherein at least one of the first sub-set and the second sub-set is selected to meet a predetermined sparsity criterion (S).

10. The method of any of claims 1 to 9, further comprising, once a predetermined quality criterion has been fulfilled, stopping the repeating and, thereafter, training the neural network using as only non-zero parameters of the plurality of parameters a last selected first sub-set of parameters of the plurality of network parameters.

11. A system comprising a general purpose processor (240), neural network training hardware (210) in communicative connection with the general purpose processor, and one or more storage devices storing instructions that when executed by the system cause the system to:
determine a forward-pass set of network parameters (*A*) of a neural network having a plurality of network parameters (*θ*) and being configured to process an input data item to generate a neural network output by selecting a first sub-set of parameters (*D*) from the plurality of network parameters and setting all other parameters of the forward-pass set of network parameters to zero, wherein the first sub-set of parameters consists of a subset of the largest of the plurality of network parameters;
process a training data item using the neural network in accordance with the forward-pass set of network parameters to generate the neural network output;
determine a value of an objective function from the neural network output and the training data item;
select a second sub-set of parameters (*M*) from the plurality of network parameters,
wherein the second sub-set of parameters consists of a subset of the next largest of the plurality of network parameters;
determine a backward-pass set of network parameters (*B*) consisting of the first sub-set of parameters and the second sub-set of parameters; and
update parameters of the plurality of network parameters corresponding to the backward-pass set of network parameters, using a gradient estimate determined from the value of the objective function; and wherein
the instructions are apportioned between the general purpose processor (240) and the neural network training hardware (210), such that:
the instructions, when executed by the neural network training hardware, cause the neural network training hardware to perform processing of the training data item using the neural network in accordance with the forward-pass set of network parameters, and updating parameters of the plurality of network parameters corresponding to the backward-pass set of network parameters; and
the instructions, when executed by the general purpose processor, cause the general purpose processor to perform selecting of the first sub-set of parameters and selecting of the second sub-set of parameters.

12. A computer program comprising instructions to cause the system of claim 11 to execute the steps of the method of any one of claims 1-10.

13. A computer-readable medium having stored thereon the computer program of claim 12.

## Patentansprüche

1. Computerimplementiertes Verfahren zum Trainieren eines neuronalen Netzwerks, das eine Mehrzahl von Netzwerkparametern (0) aufweist und konfiguriert ist, um ein Eingabedatenelement zu verarbeiten, um eine Ausgabe des neuronalen Netzwerks zu generieren, wobei das Verfahren, wiederholt, umfasst:
Bestimmen (110) eines Vorwärtsdurchlauf-Satzes von Netzwerkparametern (A) durch Auswählen einer ersten Teilmenge von Parametern (D) aus der Mehrzahl von Netzwerkparametern und Setzen aller anderen Parameter des Vorwärtsdurchlauf-Satzes von Netzwerkparametern auf null, wobei die erste Teilmenge von Parametern aus einer Teilmenge der größten der Mehrzahl von Netzwerkparametern besteht;
Verarbeiten (120) eines Trainingsdatenelements unter Verwendung des neuronalen Netzwerks in Übereinstimmung mit dem Vorwärtsdurchlauf-Satz von Netzwerkparametern, um die Ausgabe des neuronalen Netzwerks zu generieren;
Bestimmen (130) eines Wertes einer Zielfunktion aus der Ausgabe des neuronalen Netzwerks und dem Trainingsdatenelement;
Auswählen (140) einer zweiten Teilmenge von Parametern (M) aus der Mehrzahl von Netzwerkparametern, wobei die zweite Teilmenge von Parametern aus einer Teilmenge der nächstgrößten der Mehrzahl von Netzwerkparametern besteht;
Bestimmen (150) eines Rückwärtsdurchlauf-Satzes von Netzwerkparametern (B), der aus der ersten Teilmenge von Parametern und der zweiten Teilmenge von Parametern besteht; und
Aktualisieren (160) von Parametern der Mehrzahl von Netzwerkparametern, die dem Rückwärtsdurchlauf-Satz von Netzwerkparametern entsprechen, unter Verwendung einer aus dem Wert der Zielfunktion bestimmten Gradientenschätzung; wobei das Verfahren ferner umfasst:
Aufteilen des Verfahrens zwischen einem Allzweckprozessor (240) und einer Hardware zum Trainieren des neuronalen Netzwerks (210), und
Ausführen, auf dem Allzweckprozessor, der wiederholten Schritte von: Auswählen der ersten Teilmenge von Parametern und Auswählen der zweiten Teilmenge von Parametern; und
Ausführen, auf der Hardware zum Trainieren des neuronalen Netzwerks, der wiederholten Schritte von: Verarbeiten eines Trainingsdatenelements unter Verwendung des neuronalen Netzwerks in Übereinstimmung mit dem Vorwärtsdurchlauf-Satz von Netzwerkparametern und Aktualisieren von Parametern der Mehrzahl von Netzwerkparametern, die dem Rückwärtsdurchlauf-Satz von Netzwerkparametern entsprechen.

2. Verfahren nach Anspruch 1, wobei die Mehrzahl von Netzwerkparametern niemals gleichzeitig in die Hardware zum Trainieren des neuronalen Netzwerks geladen wird.

3. Verfahren nach einem der Ansprüche 1-2, wobei das neuronale Netzwerk eine Mehrzahl von neuronalen Netzwerkschichten umfasst, wobei das Verfahren umfasst: Ausführen jener wiederholten Schritte, die auf dem Allzweckprozessor ausgeführt werden, für jeweils eine neuronale Netzwerkschicht.

4. Verfahren nach einem der Ansprüche 1-3, umfassend ein Ausführen der wiederholten Schritte auf der Hardware zum Trainieren des neuronalen Netzwerks mehrere Male vor einem Ausführen der wiederholten Schritte auf dem Allzweckprozessor.

5. Verfahren nach einem der Ansprüche 1-4, umfassend, während eines Wiederholens des Verfahrens, ein Ausführen der wiederholten Schritte auf dem Allzweckprozessor und auf der Hardware zum Trainieren des neuronalen Netzwerks parallel.

6. Verfahren nach einem der Ansprüche 1-5, wobei das neuronale Netzwerk eine Mehrzahl von neuronalen Netzwerkschichten umfasst, wobei das Verfahren ferner ein Auswählen von einer oder beiden der ersten Teilmenge von Parametern und der zweiten Teilmenge von Parametern Schicht für Schicht des neuronalen Netzwerks umfasst.

7. Verfahren nach einem der Ansprüche 1-6, wobei die Zielfunktion einen Regularisierungsterm ( ${Loss}_{R} \left({α}_{i}^{t}\right)$))einschließt, umfassend einen oder mehrere von Folgendem:
einem Term, der Parameter der zweiten Teilmenge stärker bestraft als Parameter der ersten Teilmenge;
einem Term, der Parameter der zweiten Teilmenge stärker bestraft als Parameter der Mehrzahl von Netzwerkparametern, die nicht in der ersten Teilmenge oder in der zweiten Teilmenge sind; und
einem Term, der Parameter der ersten Teilmenge stärker bestraft als Parameter der Mehrzahl von Netzwerkparametern, die nicht in der ersten Teilmenge oder in der zweiten Teilmenge sind.

8. Verfahren nach einem der Ansprüche 1 bis 7, wobei die Zielfunktion einen Regularisierungsterm ( ${Loss}_{R} \left({α}_{i}^{t}\right)$) einschließt, umfassend einen Term oder Terme, die Parameter der ersten Teilmenge und der zweiten Teilmenge stärker bestrafen als Parameter, die weder in der ersten Teilmenge noch in der zweiten Teilmenge sind.

9. Verfahren nach einem der Ansprüche 1 bis 8, wobei mindestens eine der ersten Teilmenge und der zweiten Teilmenge ausgewählt ist, um ein vorbestimmtes Sparsity-Kriterium (S) zu erfüllen.

10. Verfahren nach einem der Ansprüche 1 bis 9, ferner umfassend, sobald ein vorbestimmtes Qualitätskriterium erfüllt worden ist, ein Stoppen des Wiederholens und, danach, ein Trainieren des neuronalen Netzwerks unter Verwendung, als einzige Nicht-Null-Parameter der Mehrzahl von Parametern, einer zuletzt ausgewählten ersten Teilmenge von Parametern der Mehrzahl von Netzwerkparametern.

11. System, umfassend einen Allzweck prozessor (240), eine Hardware zum Trainieren des neuronalen Netzwerks (210) in kommunikativer Verbindung mit dem Allzweckprozessor und eine oder mehrere Speichervorrichtungen, die Anweisungen speichern, die, wenn sie durch das System ausgeführt werden, das System zu Folgendem veranlassen:
Bestimmen eines Vorwärtsdurchlauf-Satzes von Netzwerkparametern *(A)* eines neuronalen Netzwerks, das eine Mehrzahl von Netzwerkparametern *(0)* aufweist und konfiguriert ist, um ein Eingabedatenelement zu verarbeiten, um eine Ausgabe des neuronalen Netzwerks zu generieren, durch Auswählen einer ersten Teilmenge von Parametern (D) aus der Mehrzahl von Netzwerkparametern und Setzen aller anderen Parameter des Vorwärtsdurchlauf-Satzes von Netzwerkparametern auf null, wobei die erste Teilmenge von Parametern aus einer Teilmenge der größten der Mehrzahl von Netzwerkparametern besteht;
Verarbeiten eines Trainingsdatenelements unter Verwendung des neuronalen Netzwerks in Übereinstimmung mit dem Vorwärtsdurchlauf-Satz von Netzwerkparametern, um die Ausgabe des neuronalen Netzwerks zu generieren;
Bestimmen eines Wertes einer Zielfunktion aus der Ausgabe des neuronalen Netzwerks und dem Trainingsdatenelement;
Auswählen einer zweiten Teilmenge von Parametern (M) aus der Mehrzahl von Netzwerkparametern, wobei die zweite Teilmenge von Parametern aus einer Teilmenge der nächstgrößten der Mehrzahl von Netzwerkparametern besteht;
Bestimmen eines Rückwärtsdurchlauf-Satzes von Netzwerkparametern *(B),* der aus der ersten Teilmenge von Parametern und der zweiten Teilmenge von Parametern besteht; und
Aktualisieren von Parametern der Mehrzahl von Netzwerkparametern, die dem Rückwärtsdurchlauf-Satz von Netzwerkparametern entsprechen, unter Verwendung einer aus dem Wert der Zielfunktion bestimmten Gradientenschätzung; und
wobei
die Anweisungen zwischen dem Allzweckprozessor (240) und der Hardware zum Trainieren des neuronalen Netzwerks (210) derart aufgeteilt sind, dass:
die Anweisungen, wenn sie durch die Hardware zum Trainieren des neuronalen Netzwerks ausgeführt werden, die Hardware zum Trainieren des neuronalen Netzwerks veranlassen, ein Verarbeiten des Trainingsdatenelements unter Verwendung des neuronalen Netzwerks in Übereinstimmung mit dem Vorwärtsdurchlauf-Satz von Netzwerkparametern und ein Aktualisieren von Parametern der Mehrzahl von Netzwerkparametern, die dem Rückwärtsdurchlauf-Satz von Netzwerkparametern entsprechen, auszuführen; und
die Anweisungen, wenn sie durch den Allzweckprozessor ausgeführt werden, den Allzweckprozessor veranlassen, ein Auswählen der ersten Teilmenge von Parametern und ein Auswählen der zweiten Teilmenge von Parametern auszuführen.

12. Computerprogramm, umfassend Anweisungen, um das System nach Anspruch 11 zu veranlassen, die Schritte des Verfahrens nach einem der Ansprüche 1-10 auszuführen.

13. Computerlesbares Medium mit dem darauf gespeicherten Computerprogramm nach Anspruch 12.

## Revendications

1. Procédé informatique d'entraînement d'un réseau neuronal présentant une pluralité de paramètres de réseau (*θ*) et étant configuré pour traiter un élément de données d'entrée afin de générer une sortie de réseau neuronal, le procédé comprenant, de manière répétée :
la détermination (110) d'un ensemble de paramètres de réseau de passe avant (*A*) par sélection d'un premier sous-ensemble de paramètres (*D*) parmi la pluralité de paramètres de réseau et mise à zéro de tous les autres paramètres de l'ensemble de paramètres de réseau de passe avant, dans lequel le premier sous-ensemble de paramètres est constitué d'un sous-ensemble des plus grands de la pluralité de paramètres de réseau ;
le traitement (120) d'un élément de données d'entraînement à l'aide du réseau neuronal conformément à l'ensemble de paramètres de réseau de passe avant afin de générer la sortie de réseau neuronal ;
la détermination (130) d'une valeur d'une fonction objectif à partir de la sortie de réseau neuronal et de l'élément de données d'entraînement ;
la sélection (140) d'un second sous-ensemble de paramètres (*M*) parmi la pluralité de paramètres de réseau, dans lequel le second sous-ensemble de paramètres est constitué d'un sous-ensemble des plus grands suivants de la pluralité de paramètres de réseau ;
la détermination (150) d'un ensemble de paramètres de réseau de rétropropagation (*B*) constitué du premier sous-ensemble de paramètres et du second sous-ensemble de paramètres ; et
la mise à jour (160) de paramètres de la pluralité de paramètres de réseau correspondant à l'ensemble de paramètres de réseau de rétropropagation, à l'aide d'une estimation de gradient déterminée à partir de la valeur de la fonction objectif ; le procédé comprenant en outre :
la répartition du procédé entre un processeur à usage général (240) et un matériel d'entraînement de réseau neuronal (210), et
la réalisation, sur le processeur à usage général, des étapes répétées suivantes : la sélection du premier sous-ensemble de paramètres et la sélection du second sous-ensemble de paramètres ; et
la réalisation, sur le matériel d'entraînement de réseau neuronal, des étapes répétées suivantes : le traitement d'un élément de données d'entraînement à l'aide du réseau neuronal conformément à l'ensemble de paramètres de réseau de passe avant, et la mise à jour de paramètres de la pluralité de paramètres de réseau correspondant à l'ensemble de paramètres de réseau de rétropropagation.

2. Procédé selon la revendication 1, dans lequel la pluralité de paramètres de réseau n'est jamais chargée simultanément dans le matériel d'entraînement de réseau neuronal.

3. Procédé selon l'une quelconque des revendications 1 à 2, dans lequel le réseau neuronal comprend une pluralité de couches de réseau neuronal, le procédé comprenant : la réalisation des étapes répétées qui sont réalisées sur le processeur à usage général, une couche de réseau neuronal à la fois.

4. Procédé selon l'une quelconque des revendications 1 à 3, comprenant la réalisation des étapes répétées sur le matériel d'entraînement de réseau neuronal plusieurs fois avant de réaliser les étapes répétées sur le processeur à usage général.

5. Procédé selon l'une quelconque des revendications 1 à 4, comprenant, tout en répétant le procédé, la réalisation des étapes répétées sur le processeur à usage général et sur le matériel d'entraînement de réseau neuronal, en parallèle.

6. Procédé selon l'une quelconque des revendications 1 à 5, dans lequel le réseau neuronal comprend une pluralité de couches de réseau neuronal, le procédé comprenant en outre la sélection de l'un ou des deux du premier sous-ensemble de paramètres et du second sous-ensemble de paramètres couche par couche du réseau neuronal.

7. Procédé selon l'une quelconque des revendications 1 à 6, dans lequel la fonction objectif comporte un terme de régularisation ( ${Loss}_{R} \left({α}_{i}^{t}\right)$) comprenant l'un ou plusieurs des éléments suivants :
un terme qui pénalise des paramètres du second sous-ensemble davantage que des paramètres du premier sous-ensemble ;
un terme qui pénalise des paramètres du second sous-ensemble davantage que des paramètres de la pluralité de paramètres de réseau qui ne sont pas dans le premier sous-ensemble ou dans le second sous-ensemble ; et
un terme qui pénalise des paramètres du premier sous-ensemble davantage que des paramètres de la pluralité de paramètres de réseau qui ne sont pas dans le premier sous-ensemble ou dans le second sous-ensemble.

8. Procédé selon l'une quelconque des revendications 1 à 7, dans lequel la fonction objectif comporte un terme de régularisation ( ${Loss}_{R} \left({α}_{i}^{t}\right)$) comprenant un ou plusieurs termes qui pénalisent des paramètres du premier sous-ensemble et du second sous-ensemble davantage que des paramètres qui ne sont dans aucun du premier sous-ensemble ou du second sous-ensemble.

9. Procédé selon l'une quelconque des revendications 1 à 8, dans lequel au moins l'un du premier sous-ensemble et du second sous-ensemble est sélectionné de manière à satisfaire à un critère de parcimonie prédéterminé (*S*).

10. Procédé selon l'une quelconque des revendications 1 à 9, comprenant en outre, une fois qu'un critère de qualité prédéterminé a été satisfait, l'arrêt de la répétition et, par la suite, l'entraînement du réseau neuronal en utilisant, comme seuls paramètres non nuls de la pluralité de paramètres, un dernier premier sous-ensemble de paramètres sélectionné de la pluralité de paramètres de réseau.

11. Système comprenant un processeur à usage général (240), un matériel d'entraînement de réseau neuronal (210) en communication avec le processeur à usage général, et un ou plusieurs dispositifs de stockage stockant des instructions qui, lorsqu'elles sont exécutées par le système, amènent le système à :
déterminer un ensemble de paramètres de réseau de passe avant ( *A* ) d'un réseau neuronal présentant une pluralité de paramètres de réseau (*θ*) et étant configuré pour traiter un élément de données d'entrée afin de générer une sortie de réseau neuronal par sélection d'un premier sous-ensemble de paramètres (*D*) parmi la pluralité de paramètres de réseau et mise à zéro de tous les autres paramètres de l'ensemble de paramètres de réseau de passe avant, dans lequel le premier sous-ensemble de paramètres est constitué d'un sous-ensemble des plus grands de la pluralité de paramètres de réseau ;
traiter un élément de données d'entraînement à l'aide du réseau neuronal conformément à l'ensemble de paramètres de réseau de passe avant afin de générer la sortie de réseau neuronal ;
déterminer une valeur d'une fonction objectif à partir de la sortie de réseau neuronal et de l'élément de données d'entraînement ;
sélectionner un second sous-ensemble de paramètres (M) parmi la pluralité de paramètres de réseau, dans lequel le second sous-ensemble de paramètres est constitué d'un sous-ensemble des plus grands suivants de la pluralité de paramètres de réseau ;
déterminer un ensemble de paramètres de réseau de rétropropagation (*B*) constitué du premier sous-ensemble de paramètres et du second sous-ensemble de paramètres ; et
mettre à jour des paramètres de la pluralité de paramètres de réseau correspondant à l'ensemble de paramètres de réseau de rétropropagation, à l'aide d'une estimation de gradient déterminée à partir de la valeur de la fonction objectif ; et
dans lequel
les instructions sont réparties entre le processeur à usage général (240) et le matériel d'entraînement de réseau neuronal (210), de telle sorte que :
les instructions, lorsqu'elles sont exécutées par le matériel d'entraînement de réseau neuronal, amènent le matériel d'entraînement de réseau neuronal à réaliser le traitement de l'élément de données d'entraînement à l'aide du réseau neuronal conformément à l'ensemble de paramètres de réseau de passe avant, et la mise à jour de paramètres de la pluralité de paramètres de réseau correspondant à l'ensemble de paramètres de réseau de rétropropagation ; et
les instructions, lorsqu'elles sont exécutées par le processeur à usage général, amènent le processeur à usage général à réaliser la sélection du premier sous-ensemble de paramètres et la sélection du second sous-ensemble de paramètres.

12. Programme informatique comprenant des instructions pour amener le système selon la revendication 11 à exécuter les étapes du procédé selon l'une quelconque des revendications 1 à 10.

13. Support lisible par ordinateur sur lequel est stocké le programme informatique selon la revendication 12.
